# EUROPÄISCHE PATENTSCHRIFT

(11) **EP 3 167 203 B1**
(45) Veröffentlichungstag und Bekanntmachung des Hinweises auf die Patenterteilung: **15.08.2018**
(21) Anmeldenummer: 15744115.5
(22) Anmeldetag: 19.06.2015
(51) Int. Cl.: F16F 15/16, F16F 15/131

(54) **ZWEIMASSENSCHWUNGRAD**
DUAL-MASS FLYWHEEL
VOLANT BIMASSE

(30) Priorität: 08.07.2014 DE 102014213239
(43) Veröffentlichungstag der Anmeldung: 17.05.2017
(73) Patentinhaber: Schaeffler Technologies AG & Co. KG, 91074 Herzogenaurach (DE)
(72) Erfinder: YOONG, How Yan, 76530 Baden-Baden (DE)
(86) Internationale Anmeldenummer: PCT/DE2015/200384
(87) Internationale Veröffentlichungsnummer: WO 2016/004943

(56) Entgegenhaltungen:
- WO-A1-2007/041980
- DE-A1- 19 624 389
- DE-A1-102010 023 373
- DE-A1-102010 053 249

## Beschreibung

Die Erfindung betrifft ein Zweimassenschwungrad mit einer Primärmasse und einer Sekundärmasse, die entgegen der Wirkung eines Federspeichers gegeneinander verdrehbar sind, wobei die Primärmasse eine Primärscheibe, die mit einer Verbindungsscheibe fest verbunden ist, umfasst und die Sekundärmasse einen Sekundärflansch umfasst, der mittels Nieten fest mit Abtriebsmitteln verbunden ist. Zweimassenschwungräder sind aus dem Stand der Technik, als Beispiel sei die DE 41 17 582 A1 genannt, bekannt. Solche Zweimassenschwungräder werden als Schwingungstilger für Torsionsschwingungen in Antriebssträngen von Kraftfahrzeugen eingesetzt, wobei das Zweimassenschwungrad in der Regel zwischen der Kurbelwelle eines das Kraftfahrzeug antreibenden Verbrennungsmotors und einer dem Schaltgetriebe vorgelagerten Fahrzeugkupplung angeordnet ist. Durch die gegen Federkraft und gegebenenfalls auch gegen trockene Reibung relativ zueinander verdrehbare Primärmasse und Sekundärmasse werden Drehschwingungen, die durch das ungleichmäßige Antriebsmoment des in der Regel als Kolbenmotor ausgeführten Verbrennungsmotors hervorgerufen werden, getilgt.

Dokument WO 2007/041980 A1 wird als nächstliegender Stand der Technik angesehen und offenbart alle Merkmale des Oberbegriffs des Anspruchs 1.

Die Bogenfederaufnahme ist üblicherweise zur Verminderung von Reibung zumindest teilweise mit viskosem Medium wie Schmierfett oder dergleichen befüllt. Weiterhin können zusätzlich oder alternativ zur Bogenfederanordnung hydraulische Dämpfungseinrichtungen vorhanden sein, bei denen viskoses Medium zur hydrodynamischen Dämpfung an Spalten eingesetzt wird.

Die Primärmasse des Zweimassenschwungrades ist bei gattungsgemäßen Zweimassenschwungrädern mehrteilig ausgeführt und umfasst eine Primärscheibe, die mit einer Verbindungsscheibe, einer so genannten Flexplate, fest vernietet ist. Die Flexplate wird ggf. mit weiteren Bauteilen wie einer Zentriernabe für die Sekundärseite mit der Kurbelwelle verschraubt.

Die Flexplate weist Bohrungen auf, so genannte Hauptvernietungsbohrungen, durch die ein Setz- oder Nietkopf zur Vernietung von Sekundärflansch mit nachgeordneten Teilen der Sekundärseite, insbesondere mit einer Kupplungs-Gegendruckplatte, zugänglich ist.

Durch die Hauptvernietungsbohrungen der Flexplate kann Wasser in die Bogenfederaufnahme eindringen und das Schmierfett auswaschen.

Eine Aufgabe der Erfindung ist es daher, ein gattungsgemäßes Zweimassenschwungrad anzugeben, das zumindest weitgehend wasserdicht ist.

Dieses Problem wird durch ein Zweimassenschwungrad nach Anspruch 1 gelöst. Bevorzugte Ausführungsformen, Ausgestaltungen oder Weiterbildungen der Erfindung sind in den abhängigen Ansprüchen angegeben.

Das oben genannte Problem wird insbesondere gelöst durch ein Zweimassenschwungrad mit einer Primärmasse und einer Sekundärmasse, die entgegen der Wirkung eines Federspeichers gegeneinander verdrehbar sind, wobei die Primärmasse eine Primärscheibe, die mit einer Verbindungsscheibe fest verbunden ist, umfasst und die Sekundärmasse einen Sekundärflansch umfasst, der mittels Nieten fest mit Abtriebsmitteln verbunden ist, wobei die Primärscheibe die Verbindungsscheibe sowie die Nieten im Sekundärflansch radial nach innen überdeckt und die Verbindungsscheibe sowie die Primärscheibe Öffnungen für die Niete aufweisen, wobei die Öffnungen in der Primärscheibe mit Dichtkappen versehen sind. Die Primärscheibe ragt soweit nach innen, dass diese zugleich als Dichtung oder Dichtungsträger für eine Dichtung fungiert. Der Federspeicher ist insbesondere eine Bogenfederanordnung umfassend eine oder mehrere Bogenfedern. Die Abtriebsmittel sind in einer Ausführungsform der Erfindung im Momentenpfad nachfolgende Bauteile einer Fahrzeugkupplung, beispielsweise ein Flansch einer Kupplungsgegendruckplatte. Die Öffnungen (Hauptvernietungsbohrungen) der Verbindungsplatte (Flexplate) sowie die Öffnungen in der Primärscheibe ermöglichen das Vernieten des Sekundärflansches mit diesem im Momentenpfad nachgeordneten Bauteilen wie einer Kupplungsgegendruckplatte oder dergleichen. Nach Herstellen der Vernietung werden die Öffnungen in der Primärscheibe mit den Dichtkappen versehen und dadurch abgedichtet.

Zwischen Primärscheibe und Sekundärflansch ist in einer Ausführungsform der Erfindung eine Dichtung angeordnet. Die Dichtung dichtet den Spalt zwischen Primärscheibe und Sekundärflansch ab. Darüber hinaus trägt die Dichtung zur Zentrierung des Sekundärflansches bei und bildet in axialer Richtung eine Anlage oder einen Anschlag für den Sekundärflansch.

Die Nieten zur Vernietung des Sekundärflansches mit nachfolgenden Bauteilen der Fahrzeugkupplung sind in einer Ausführungsform der Erfindung auf einem Nietkreis angeordnet, wobei die Dichtung radial innerhalb des Nietkreises angeordnet ist. Diese Geometrie ermöglicht es, die Dichtung am Innenumfang von Primärscheibe und/oder Sekundärflansch festzulegen, so dass keine zusätzlichen Bauteile zur Befestigung der Dichtung an der Primärscheibe oder dem Sekundärflansch notwendig sind.

Die Dichtung weist in einer Ausführungsform der Erfindung mindestens einen Bereich auf, der an einem Innenumfang der Primärscheibe und/oder des Sekundärflansches anliegt. Ebenso ist es möglich, dass die Dichtung zwei Bereiche aufweist, von denen der eine am Innenumfang der Primärscheibe und der andere am Innenumfang des Sekundärflansches anliegt. Durch diese Ausgestaltung trägt die Dichtung besonders effektiv zur Zentrierung des Sekundärflansches gegenüber der Primärscheibe bei und bewirkt eine besonders effektive Abdichtung des Spaltes zwischen beiden.

Die Dichtung weist in einer Ausführungsform der Erfindung mindestens einen Bereich auf, der in einen Spalt zwischen Primärscheibe und Sekundärflansch ragt. Diese Maßnahme erhöht die Dichtwirkung und ergibt einen flächigen axialen Anschlag des Sekundärflansches an der Primärscheibe.

Die Primärscheibe ist in einer Ausführungsform der Erfindung mit der Verbindungsscheibe vernietet. Eine Nietverbindung lässt sich besonders einfach und kostengünstig herstellen und weist besonders gute mechanische Eigenschaften sowie eine gute Haltbarkeit der Verbindung auf.

Die Primärscheibe weist in einer Ausführungsform der Erfindung radial innerhalb einer Vernietung mit der Verbindungsscheibe einen umlaufenden Absatz auf. Der umlaufende Absatz sorgt dafür, dass die Primärscheibe außerhalb der Vernietung mit der Verbindungsscheibe von dieser beabstandet ist, so dass keine Reibung mit einhergehender Abnutzung zwischen beiden gegeben ist.

Zwischen Primärscheibe und Verbindungsscheibe besteht in einer Ausführungsform der Erfindung radial innerhalb des umlaufenden Absatzes ein Spalt. Durch den Spalt besteht ein ausreichend großer Abstand zwischen Primärscheibe und Verbindungsscheibe.

Die Öffnungen für die Niete sind in einer Ausführungsform der Erfindung kreisförmig als Bohrung ausgeführt. Die Durchmesser der Bohrungen in der Verbindungsplatte (Flexplate) sind größer als die Öffnungen oder Bohrungen in der Primärscheibe. Dies erleichtert das Vernieten des Sekundärflansches mit den dieser im Momentenpfad nachgeordneten Baugruppen. Zudem ermöglicht diese Ausgestaltung, dass die Dichtkappen durch die Bohrungen in der Verbindungsplatte hindurchgeführt und in den Bohrungen in der Primärscheibe eingepresst werden können.

Die Dichtkappen sind in einer Ausführungsform der Erfindung becherförmige Metallkappen. Derartige Dichtkappen lassen sich leicht und kostengünstig beispielsweise durch Tiefziehen aus Blech fertigen. Alternativ können die Dichtkappen aus Kunststoff gefertigt sein.

Die Primärschwungscheibe verläuft bis unterhalb der Hauptvernietungsbohrungen, damit in diese die Dichtkappen eingepresst werden können. Zwischen der Primärschwungscheibe und dem Sekundärflansch befindet sich zusätzlich ein Reibring, der ein Kunststoffteil ist. Der Reibring dient als axiale Abstützung für den Flansch und um den Bereich der Bogenfederaufnahme abzudichten.

Ein Ausführungsbeispiel der Erfindung wird nachfolgend anhand der beiliegenden Zeichnungen näher erläutert. Dabei zeigt:

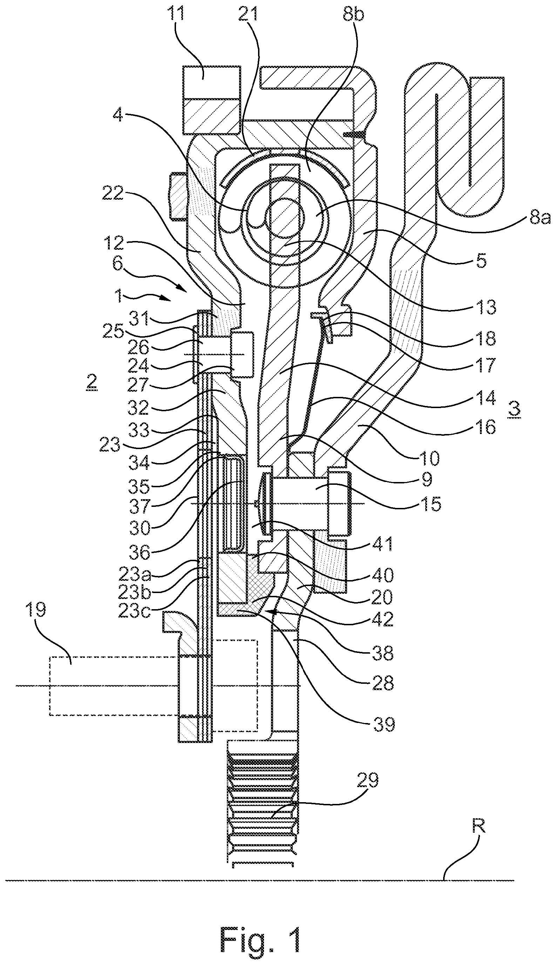

- Fig. 1: ein Ausführungsbeispiel eines erfindungsgemäßen Zweimassenschwungrades in einer Schnittdarstellung.

Fig. 1 zeigt ein Ausführungsbeispiel eines erfindungsgemäßen Zweimassenschwungrades 1. Ein solches Zweimassenschwungrad 1 wird im Antriebsstrang eines Kraftfahrzeuges zwischen der Kurbelwelle des Verbrennungsmotors und der Fahrzeugkupplung angeordnet. Der Verbrennungsmotor ist üblicherweise ein Otto- oder Dieselmotor. Die Fahrzeugkupplung ist eine Einfach- oder Doppelkupplung. Das Drehmoment der Fahrzeugkupplung wird über ein Schaltgetriebe, das ein Schaltgetriebe mit einer Vorgelegewelle (bei einer Einfachkupplung) oder mit zwei Vorgelegewellen (bei einer Doppelkupplung) ist über ein oder bei Allrad mehrere Differenzialgetriebe und Kardanwellen auf die Antriebsräder übertragen.

Die Rotationsachse des Zweimassenschwungrades ist in Fig. 1 mit R bezeichnet. Die Rotationsachse R ist die Rotationsachse des Zweimassenschwungrades 1 und gleichzeitig die Rotationsachse einer Kurbelwelle eines nicht dargestellten Verbrennungsmotors und auch die Rotationsachse einer dem Zweimassenschwungrad 1 nachgeordneten Fahrzeugkupplung, die ebenfalls nicht dargestellt ist. Im Folgenden wird unter der axialen Richtung die Richtung parallel zur Rotationsachse R verstanden, entsprechend wird unter der radialen Richtung eine Richtung senkecht zur Rotationsachse R verstanden. Die Umfangsrichtung ist eine Drehung um die Rotationsachse R.

Das Zweimassenschwungrad 1 umfasst eine Primärschwungmasse 2 sowie eine Sekundärschwungmasse 3, die gegen die Kraft einer Bogenfederanordnung 4 relativ zueinander um die Rotationsachse R verdreht werden können. Die Primärschwungmasse wird auch als Primärseite oder Eingangsteil, die Sekundärschwungmasse auch als Sekundärseite oder Ausgangsteil bezeichnet. Die Bogenfederanordnung 4 umfasst mehrere in Umfangsrichtung angeordnete Bogenfedern 8, wobei jede Bogenfeder 8 im vorliegenden Ausführungsbeispiel koaxial angeordnete innere Bogenfedern 8a und äußere Bogenfedern 8b umfasst. Die Bogenfedern 8 werden im Betrieb durch die auf diese einwirkende Fliehkraft nach außen gegen die Primärschwungmasse 2 gedrückt. Daher ist an der radial außengelegenen Seite eine Gleitschale 21 angeordnet, welche den Verschleiß zwischen den Bogenfedern und der Primärschwungmasse 2 verringert. Die Primärschwungmasse 2 umfasst ein motorseitiges Primärschwungmassenblech 6 und einen kupplungsseitigen Primärschwungmassendeckel 5. Das Primärschwungmassenblech 6 und der Primärschwungmassendeckel 5 schließen eine Bogenfederaufnahme 12 ein, in der die Bogenfedern 8 angeordnet sind. Die Bogenfedern 8 stützen sich mit einem Federende jeweils an der Primärschwungmasse 2 ab, beispielsweise an hier nicht dargestellten Stegen oder Nasen, die in die von dem Primärschwungmassenblech 6 und dem Primärschwungmassendeckel 5 umschlossene Bogenfederaufnahme 12 ragen. Mit dem jeweils anderen Federende stützen sich die Dämpferfedern 8 an Flanschflügeln 13 eines Sekundärflansches 9 ab. Die Flanschflügel 13 erstrecken sich radial nach außen und Fassen die Federenden der Bogenfedern 8 ein. Die Seelenachse der Bogenfedern, das ist eine kreisförmige Linie, die entlang der Kreismittelpunkte der Bogenfeder bei Schnitten parallel zur Rotationsachse entsteht, ein solcher Schnitt ist z. B. der gemäß Fig. 1, verläuft durch die Flanschflügel 13. Zwei Außenbereiche der Federenden der Bogenfedern stützen sich jeweils an dem Primärschwungmassenblech 6 und Primärschwungmassendeckel 5 ab. Der Sekundärflansch 9 weist einen Absatz 14 nach Art einer Kröpfung auf, sodass ein äußerer Teil axial in Richtung der Kupplung versetzt zu einem inneren Teil angeordnet ist. Dadurch kann die Lage der Bogenfederaufnahme 12 auf die Kupplung hin verschoben angeordnet werden, sodass der axiale Bauraum verringert werden kann. Der Sekundärflansch 9 ist mit einem Kupplungsflansch 10 sowie einem Stützflansch 20 mittels Nieten 15 verbunden. Der Kupplungsflansch 10 ist Teil einer Ein- oder Mehrscheibenkupplung. In Einbaulage des Zweimassenschwungrades 1 ist die Masse bzw. das Massenträgheitsmoment des Kupplungsflansches 10 samt aller drehfest mit diesem verbundenen Teile der Fahrzeugkupplung wie Druckplatte(n), Tellerfeder(n) etc. Teil der Sekundärschwungmasse.

An dem Primärschwungmassendeckel 7 ist des Weiteren ein Anlasserzahnkranz 11 angeordnet, welcher in Einbaulage des Zweimassenschwungrades mit einem hier nicht dargestellten elektrischen Anlasser des Kraftfahrzeugs in Eingriff gebracht werden kann. Die Primärschwungmasse 2 wird in Einbaulage zur Übertragung eines Drehmoments mit der Kurbelwelle des Verbrennungsmotors mit Befestigungsschrauben 19 mit der nicht dargestellten Kurbelwelle des Verbrennungsmotors verschraubt. Der Stützflansch 20 umfasst Bohrungen 28, durch die die Befestigungsschrauben 19 eingeführt und verschraubt werden können. Eine Verzahnung 29 ermöglicht eine Befestigung des Stützflansches an einer nicht dargestellten Nabe mittels einer Axialverzahnung.

An dem Sekundärflansch 9 ist eine Tellerfedermembran 16 angeordnet. Die Tellerfedermembran 16 ist zwischen dem Sekundärflansch 9 und dem Kupplungsflansch 10 eingeklemmt und mit diesen zusammen vernietet. Eine Kontaktfläche 17 der Tellerfedermembran 16 ist mit einem Membranring 18, der an dem Primärschwungmassendeckel 5 angeordnet ist, in gleitendem Kontakt. Die Tellerfedermembran 16 ist so in axialer Richtung vorgespannt, dass die Kontaktfläche 17 auf den Membranring 18 gedrückt wird. Der Membranring 18 hat einen in etwa L-förmigen Querschnitt mit einem sich im Wesentlichen axial erstreckenden Axialschenkel und einem sich schräg erstreckenden Radialschenkel. Mit schräg ist hier gemeint, dass sich der Radialschenkel um einen Winkel größer als null gegenüber der radialen Richtung geneigt erstreckt. Der Axialschenkel liegt an einer umlaufenden radialen Anlageschulter einer Ausnehmung im radial inneren Bereich des Primärschwungmassendeckels 5 an. Der Radialschenkel liegt an einer schräg verlaufenden Anlagefläche an. Die Tellerfedermembran 16 bildet mit dem Membranring 18 eine Dichtung.

Das Primärschwungmassenblech 6 umfasst eine Primärscheibe 22 und eine Verbindungsscheibe 23. Die Verbindungsscheibe 23 wird auch als Flexplate bezeichnet. Die Verbindungsscheibe 23 kann wie im vorliegenden Ausführungsbeispiel aus mehreren gleichen Verbindungsscheibenteilen 23a, 23b und 23c bestehen, die axial gestapelt sind. Die Primärscheibe 22 ist der radial außen gelegene Teil des Primärschwungmassenblechs 6 und ist mit dem Primärschwungmassendeckel 5 verbunden. Die Verbindungsscheibe 23 weist Bohrungen 30 auf, durch die die Niete 15 zugänglich sind.

Die Primärscheibe 22 ist mittels Nieten 24 mit der Verbindungsscheibe 23 fest verbunden. Zum Einbringen der Niete 24 sind sowohl in der Primärscheibe 22 als auch in der Verbindungsscheibe 23 Bohrungen eingebracht, durch die die Niete, welche aus einem Nietschaft mit daran angeformtem Setzkopf 25 bestehen, in die Bohrungen eingesteckt werden, so dass diese durch die Bohrungen in der Primärscheibe 22 und der Verbindungsscheibe 23 ragen. Der Setzkopf 25 ist dabei auf der Kurbelwellenseite des Zweimassenschwungrades gelegen. Auf der dem Setzkopf 24 gegenüberliegenden Seite wird zur Herstellung der Nietverbindung der überstehende Teil des Nietschaftes 26 zu einem Schließkopf 27 geformt. Dies erfolgt in der Regel durch Kaltumformung mittels einer Presse.

Die Niete 24 sind auf einem Bohrungskreis oder Nietkreis angeordnet, haben also alle den gleichen Abstand zur Rotationsachse R. Der Nietkreis teilt die Primärscheibe 22 in einen radial äußeren Scheibenteil 31 sowie einen radial inneren Scheibenteil 32. Der radial innere Scheibenteil 32 weist einen kegelförmigen Absatz 33 ähnlich einer Kröpfung auf, so dass der radial weiter innen als der Absatz 33 gelegene Teil des inneren Scheibenteils 32 durch einen Spalt 34 beabstandet von der Verbindungsscheibe 23 ist.

Der inneren Scheibenteil 32 und damit die Primärscheibe 22 ragt soweit nach innen über die Vernietung mit der Verbindungsscheibe 23, dass diese(r) die Niete 15 überdeckt oder auch deutlich überdeckt. Koaxial zu den Nieten 15 sind Bohrungen 35 in den radial inneren Scheibenteil 32 eingebracht. Die Bohrungen 30 sind koaxial zu den Bohrungen 35 und den Nieten 15 angeordnet. Der Durchmesser der Bohrungen 35 ist so bemessen, dass zum einen die Niete 15 eingeführt werden können, zum anderen ein Nietwerkzeug wie zum Beispiel ein Setzkopf durch die Bohrungen 34 eingeführt werden kann. Der Durchmesser der Bohrungen 30 ist größer als der Durchmesser der Bohrungen 35. In den Bohrungen 35 sind Dichtkappen 36 eingepresst. Die Dichtkappen 36 sind becherförmige Blech-Tiefziehteile. Diese weisen an einem becherförmigen Oberrand einen umlaufenden Ring 37auf, der zu einem festen Sitz in den Bohrungen 35 beiträgt.

Zwischen dem radial inneren Scheibenteil 32 der Primärscheibe 22 und dem radial inneren Umfang des Sekundärflansches 9 ist eine Dichtung 38 angeordnet. Die Dichtung 38 umfasst einen ersten ringförmigen Dichtungsteil 39, der im Innenumfang des radial inneren Scheibenteils 32 der Primärscheibe 22 angeordnet ist, einen im wesentlichen scheibenförmigen mittleren Dichtungsteil 40, der in einen Spalt 41 zwischen dem radial inneren Scheibenteil 32 und dem Sekundärflansch 9 ragt, sowie einen zweiten ringförmigen Dichtungsteil 42, der im Innenumfang des Sekundärflansches 9 angeordnet ist.

Indem die Dichtung 38 sowohl in den Innenumfang des inneren Scheibenteils 32 der Primärscheibe 22 als auch in den Innenumfang des Sekundärflansches 9 ragt, wird der Sekundärflansch 9 gegenüber der Primärscheibe 22 zusätzlich zentriert. Zudem bildet der mittlere Dichtungsteil 40 einen axialen Anschlag für den Sekundärflansch 9, indem dieser in den Spalt 41 zwischen dem radial inneren Scheibenteil 32 und dem Sekundärflansch 9 ragt.

### Bezugszeichenliste

- 1: Zweimassenschwungrad
- 2: Primärschwungmasse
- 3: Sekundärschwungmasse
- 4: Bogenfederanordnung
- 5: Primärschwungmassendeckel
- 6: Primärschwungmassenblech
- 8: Bogenfedern
- 8a: innere Bogenfedern
- 8b: äußere Bogenfedern
- 9: Sekundärflansch
- 10: Kupplungsflansch der Fahrzeugkupplung
- 11: Anlasserzahnkranz
- 12: Bogenfederaufnahme
- 13: Flanschflügel
- 14: Absatz
- 15: Niet
- 16: Tellerfedermembran
- 17: Kontaktfläche
- 18: Membranring
- 19: Befestigungsschraube
- 20: Stützflansch
- 21: Gleitschale
- 22: Primärscheibe
- 23: Verbindungsscheibe
- 23a, 23b, 23c: Verbindungsscheibenteile
- 24: Niete
- 25: Setzkopf
- 26: Nietschaft
- 27: Schließkopf
- 28: Bohrung in Stützflansch
- 29: Verzahnung
- 30: Bohrung in Verbindungsscheibe
- 31: radial äußerer Scheibenteil
- 32: radial innerer Scheibenteil
- 33: kegelförmiger Absatz
- 34: Spalt zwischen Verbindungsscheibe und Primärscheibe
- 35: Bohrung in radial innerem Scheibenteil der Primärscheibe
- 36: Dichtkappe
- 37: Ring
- 38: Dichtung
- 39: erster ringförmiger Dichtungsteil
- 40: mittlerer Dichtungsteil
- 41: Spalt zwischen Primärscheibe und Sekundärflansch
- 42: zweiter ringförmiger Dichtungsteil

## Patentansprüche

1. Zweimassenschwungrad (1) mit einer Primärmasse (2) und einer Sekundärmasse (3), die entgegen der Wirkung eines Federspeichers (4) gegeneinander verdrehbar sind, wobei die Primärmasse eine Primärscheibe (22), die mit einer Verbindungsscheibe (23) fest verbunden ist, umfasst und die Sekundärmasse (3) einen Sekundärflansch (9) umfasst, der mittels Nieten (15) fest mit Abtriebsmitteln (10) verbunden ist, wobei die Primärscheibe Öffnungen für die Niete aufweist, wobei die Öffnungen (35) in der Primärscheibe mit Dichtkappen (36) versehen sind, **dadurch gekennzeichnet, dass** die Primärscheibe (22) die Verbindungsscheibe (23) sowie die Niete (15) im Sekundärflansch radial nach innen überdeckt und die Verbindungsscheibe (23) Öffnungen (30, 35) für die Niete (15) aufweist.

2. Zweimassenschwungrad nach Anspruch 1, **dadurch gekennzeichnet, dass** zwischen Primärscheibe (22) und Sekundärflansch (9) eine Dichtung (38) angeordnet ist.

3. Zweimassenschwungrad nach Anspruch 2, **dadurch gekennzeichnet, dass** die Niete (15) zur Vernietung des Sekundärflansches (9) mit nachfolgenden Bauteilen (10) der Fahrzeugkupplung auf einem Nietkreis angeordnet sind und die Dichtung (38) radial innerhalb des Nietkreises angeordnet ist.

4. Zweimassenschwungrad nach Anspruch 3, **dadurch gekennzeichnet, dass** die Dichtung (38) mindestens einen Bereich (39, 42) aufweist, der an einem Innenumfang der Primärscheibe (22) und /oder des Sekundärflansches (9) anliegt.

5. Zweimassenschwungrad nach Anspruch 4, **dadurch gekennzeichnet, dass** die Dichtung (38) mindestens einen Bereich (40) aufweist, der in einen Spalt (41) zwischen Primärscheibe (22) und Sekundärflansch (9) ragt.

6. Zweimassenschwungrad nach einem der vorhergehenden Ansprüche, **dadurch gekennzeichnet, dass** die Primärscheibe (22) mit der Verbindungsscheibe (23) vernietet (24) ist.

7. Zweimassenschwungrad nach einem der vorhergehenden Ansprüche, **dadurch gekennzeichnet, dass** die Primärscheibe (22) radial innerhalb einer Vernietung (24) mit der Verbindungsscheibe (23) einen umlaufenden Absatz (33) aufweist.

8. Zweimassenschwungrad nach Anspruch 7, **dadurch gekennzeichnet, dass** zwischen Primärscheibe (22) und Verbindungsscheibe (23) radial innerhalb des umlaufenden Absatzes (33) ein Spalt (34) besteht.

9. Zweimassenschwungrad nach einem der vorhergehenden Ansprüche, **dadurch gekennzeichnet, dass** die Öffnungen (30, 35) für die Niete (15) kreisförmig sind.

10. Zweimassenschwungrad nach einem der vorhergehenden Ansprüche, **dadurch gekennzeichnet, dass** die Dichtkappen (36) becherförmige Metallkappen sind.

## Claims

1. Dual-mass flywheel (1) having a primary mass (2) and a secondary mass (3) which can be rotated with respect to one another counter to the action of a spring force accumulator (4), the primary mass comprising a primary disc (22) which is connected fixedly to a connecting disc (23), and the secondary mass (3) comprising a secondary flange (9) which is connected fixedly to output means (10) by means of rivets (15), the primary disc having openings for the rivets, the openings (35) in the primary disc being provided with sealing caps (36), **characterized in that** the primary disc (22) covers the connecting disc (23) and the rivets (15) in the secondary flange radially to the inside, and the connecting disc (23) has openings (30, 35) for the rivets (15).

2. Dual-mass flywheel according to Claim 1, **characterized in that** a seal (38) is arranged between the primary disc (22) and the secondary flange (9).

3. Dual-mass flywheel according to Claim 2, **characterized in that** the rivets (15) for riveting the secondary flange (9) to following components (10) of the vehicle clutch are arranged on a rivet circle, and the seal (38) is arranged radially within the rivet circle.

4. Dual-mass flywheel according to Claim 3, **characterized in that** the seal (38) has at least one region (39, 42) which bears against an inner circumference of the primary disc (22) and/or of the secondary flange (9).

5. Dual-mass flywheel according to Claim 4, **characterized in that** the seal (38) has at least one region (40) which protrudes into a gap (41) between the primary disc (22) and the secondary flange (9).

6. Dual-mass flywheel according to one of the preceding claims, **characterized in that** the primary disc (22) is riveted (24) to the connecting disc (23).

7. Dual-mass flywheel according to one of the preceding claims, **characterized in that** the primary disc (22) has a circumferential shoulder (33) radially within a riveted connection (24) to the connecting disc (23) .

8. Dual-mass flywheel according to Claim 7, **characterized in that** there is a gap (34) radially within the circumferential shoulder (33) between the primary disc (22) and the connecting disc (23).

9. Dual-mass flywheel according to one of the preceding claims, **characterized in that** the openings (30, 35) for the rivets (15) are circular.

10. Dual-mass flywheel according to one of the preceding claims, **characterized in that** the sealing caps (36) are cup-shaped metal caps.

## Revendications

1. Volant bimasse (1) avec une masse primaire (2) et une masse secondaire (3), qui peuvent tourner l'une par rapport à l'autre contre l'action d'un accumulateur à ressort (4), dans lequel la masse primaire comprend un disque primaire (22), qui est solidaire d'un disque de liaison (23), et la masse secondaire (3) comprend une bride secondaire (9), qui est attachée au moyen de rivets (15) à des moyens de sortie (10), dans lequel le disque primaire présente des ouvertures pour les rivets, dans lequel les ouvertures (35) dans le disque primaire sont munies de capuchons d'étanchéité (36), **caractérisé en ce que** le disque primaire (22) recouvre le disque de liaison (23) ainsi que les rivets (15) dans la bride secondaire radialement vers l'intérieur et le disque de liaison (23) présente des ouvertures (30, 35) pour les rivets (15).

2. Volant bimasse selon la revendication 1, **caractérisé en ce qu'**un joint d'étanchéité (38) est disposé entre le disque primaire (22) et la bride secondaire (9).

3. Volant bimasse selon la revendication 2, **caractérisé en ce que** les rivets (15) pour le rivetage de la bride secondaire (9) avec des composants suivants (10) de l'embrayage du véhicule sont disposés sur un cercle de rivets et le joint d'étanchéité (38) est disposé radialement à l'intérieur du cercle de rivets.

4. Volant bimasse selon la revendication 3, **caractérisé en ce que** le joint d'étanchéité (38) présente au moins une région (39, 42), qui s'applique sur une périphérie intérieure du disque primaire (22) et/ou de la bride secondaire (9).

5. Volant bimasse selon la revendication 4, **caractérisé en ce que** le joint d'étanchéité (38) présente au moins une région (40), qui pénètre dans une fente (41) entre le disque primaire (22) et la bride secondaire (9).

6. Volant bimasse selon l'une quelconque des revendications précédentes, **caractérisé en ce que** le disque primaire (22) est rivé (24) au disque de liaison (23) .

7. Volant bimasse selon l'une quelconque des revendications précédentes, **caractérisé en ce que** le disque primaire (22) présente un épaulement périphérique (33) radialement à l'intérieur d'un rivetage (24) avec le disque de liaison (23).

8. Volant bimasse selon la revendication 7, **caractérisé en ce qu'**il existe radialement à l'intérieur de l'épaulement périphérique (33) une fente (34) entre le disque primaire (22) et le disque de liaison (23).

9. Volant bimasse selon l'une quelconque des revendications précédentes, **caractérisé en ce que** les ouvertures (30, 35) pour les rivets (15) sont de forme circulaire.

10. Volant bimasse selon l'une quelconque des revendications précédentes, **caractérisé en ce que** les capuchons d'étanchéité (36) sont des capuchons métalliques en forme de godet.
